# EUROPEAN PATENT APPLICATION

(11) **EP 0 987 099 A2**
(43) Date of publication of application: **22.03.2000**
(21) Application number: 99307350.1
(22) Date of filing: 16.09.1999
(51) Int. Cl.: B32B 7/00

(54) **Light weight board**

(30) Priority: 16.09.1998 GB 9820047
(71) Applicant: Marathon Limited, Mursley, Milton Keynes MK17 ORT (GB)
(72) Inventor: Smith, Christopher, Cardiff CF5 4QT (GB)
(74) Representative: Gibson, Stewart Harry

(57) **Abstract**

A laminate comprises a surface material layer (1) supported on two or more light-weight layers (3), and a relatively thin layer (2) of structural material provided between the or each adjacent pair of light-weight layers. The structural material layer (2) has sufficient thickness and strength to provide a fixing.

## Description

The present invention relates to the construction of a lightweight laminate or laminated board.

Laminated board constructions or panels are often used for applications such as work surfaces, shop counters and shop shelving etc. Typically the laminate consists of a decorative surface bonded to a chipboard or fibreboard backing for support and strength. These laminates are often referred to as high pressure laminates due to the pressure needed to bond the thin decorative laminate to the backing substrate. More recently there has been an increase in the use of so-called solid surface materials which, unlike high pressure laminates, have a thickness of several millimetres. Although stronger, solid surface materials sill require support and are therefor mounted or sometimes laminated to materials such as chipboard or fibreboard.

Solid surface materials with a backing board are heavy to handle therefore adding to costs throughout the manufacturing process as well as adding to installation and transport costs. Several attempts have been made to produce lightweight constructions typically using core materials manufactured from paper or fibre in a honey comb arrangement or by using foamed plastics. This provides a lightweight product but suffers from the lack of adequate anchorage for fixings such as screws. As a result, anchorage points have to be build-in, such as by introducing wooden inserts, where an anchorage is known to be needed. This however is not satisfactory if standard size sheets are to be produced which may be later used for varied application where different shapes will require a variety of joints and fixings, which cannot be foreseen.

We have now devised a laminate which overcomes the limitations of the existing systems.

In accordance with the present invention, there is provided a laminate which comprises a surface material layer supported on two or more light-weight layers, and a relatively thin layer of structural material, having sufficient thickness and strength to provide a fixing, provided between the or each adjacent pair of light-weight layers.

Preferably the surface material layer comprises a so-called solid surface material, typically with a thickness in the range 5 to 10mm. By a solid surface material, we mean a resin-based material (preferably an acrylic resin-based material) incorporating particulate or granular filler, the filler (typically a mineral filler e.g. granite or marble) forming the major proportion e.g. 80% of the overall material. In joining two boards together, each having such a surface material layer, these layers may be chemically fused together to form a continuous surface finish: this is highly advantageous in building work surfaces etc. for applications where hygiene is an important requirement e.g. kitchens and surgeries.

Preferably the structural layer comprises a wood-based product such as chipboard or fibreboard or plywood, or a wood substitute, enabling recesses (for fixing purposes) to be cut into the underside of the board, and through the structural layer, using standard woodworking tools on-site.

Preferably the light-weight layers comprise foamed plastics material.

Preferably the laminate has a thin finishing layer on the non-functional side: alternatively both faces may be functional and both provided with the surface material.

An embodiment of the present invention will now be described by way of example only and with reference to the accompanying drawings, in which:
FIGURE 1 is a side elevation of a laminate in accordance with the present invention;
FIGURE 2 is a side elevation of a fixing clip;
FIGURE 3 is a side elevation of an edging strip;
FIGURE 4 is scrap view of two routed recesses for butt-joining sections together;
FIGURE 5 is a section through the recess shown in Figure 4;
FIGURE 6 is a view of the bolt used to tighten the two joining edges together,
FIGURE 7 is a section through a corner joint showing the screw fixing.

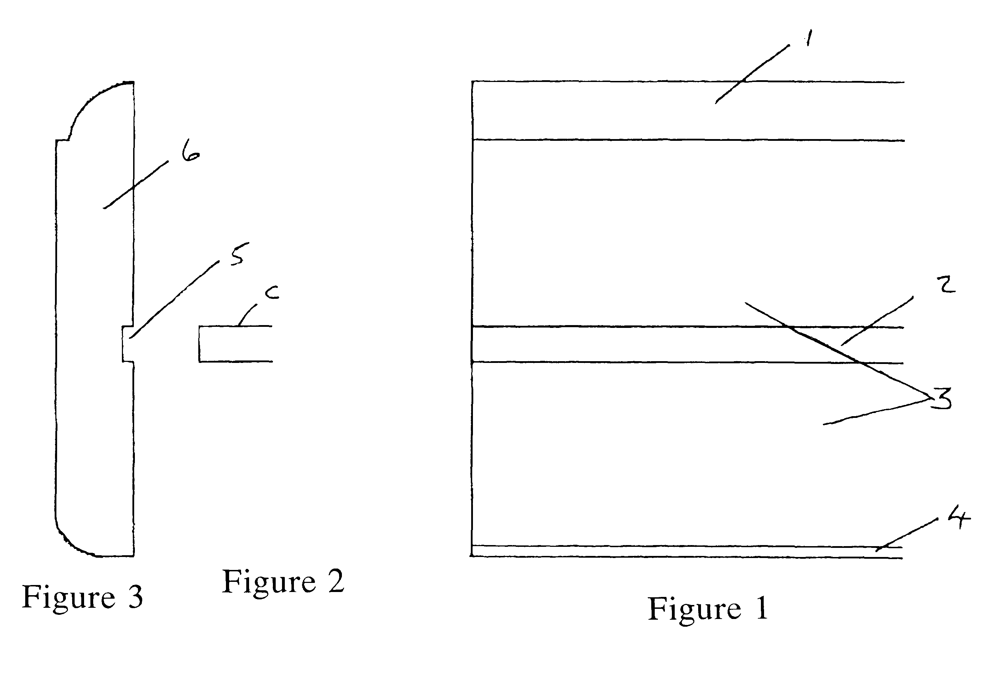

Referring to Figure 1, thee is shown a laminate which comprises a solid surface layer 1, a structural layer 2 of a non-metal material e.g. medium density fibre board (MDF), two light-weight layers of fire retardant foamed plastics material 3 and a finishing layer 4: adjacent layers are bonded to one another using a flexible adhesive.

Figure 2 shows a U-shape fixing clip C, which may be pre-bonded into a recess 5 in the edging strip 6 shown in Figure 3. The edging strip 6 would normally be supplied with clips placed at intervals along it so that it can be located in its correct position relative to the edge of the laminated board by engaging the clips over the edge of the structural layer 2. Once accurately located, it can be bonded permanently to provide a sealed and near-invisible joint. The clips may however be dispensed with and the edging strip simply bonded to the edge of the laminate.

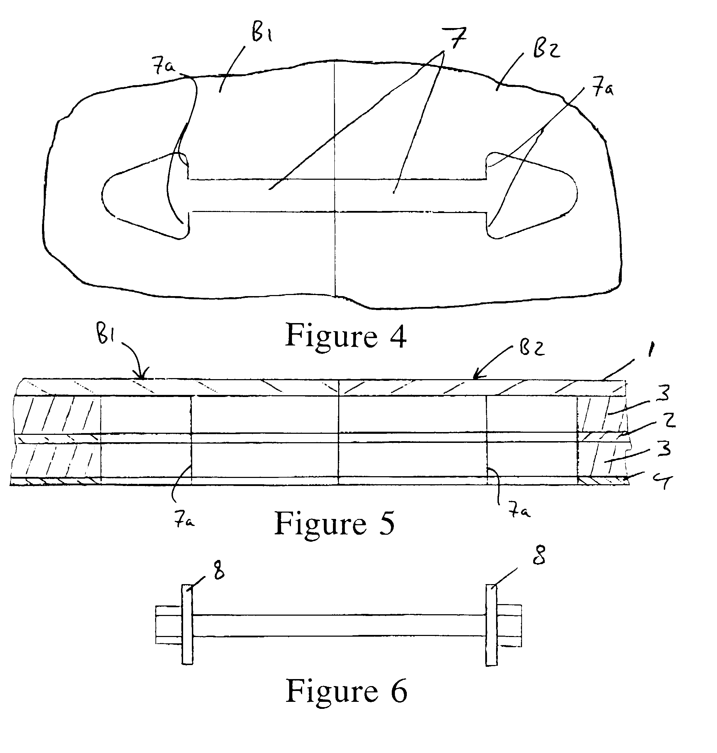

Figure 4 shows a plan view of the recesses 7 typically routed into the underside of worktops to allow the fitting of worktop bolts. These allow the pre-prepared edges of adjoining laminated boards B1,B2 to be pulled tightly together and, with a suitable bonding agent, provide a secure, sealed and near-invisible joint. Figure 5 shows a section through the two recesses where the solid surface layer 1 is not cut away but the remaining layers 2,3 and 4 are all machined through to the shape shown in Figure 4. The worktop bolt shown in Figure 6 is positioned such that the load is dissipated through the washers 8 into the structural layer 2, via the shoulders 7a of the recesses 7. The solid surface layer 1 is of a material such that the bonding agent promotes a chemical fuse between the corresponding layers of the two boards: accordingly, the surface becomes substantially continuous across a substantially invisible join.

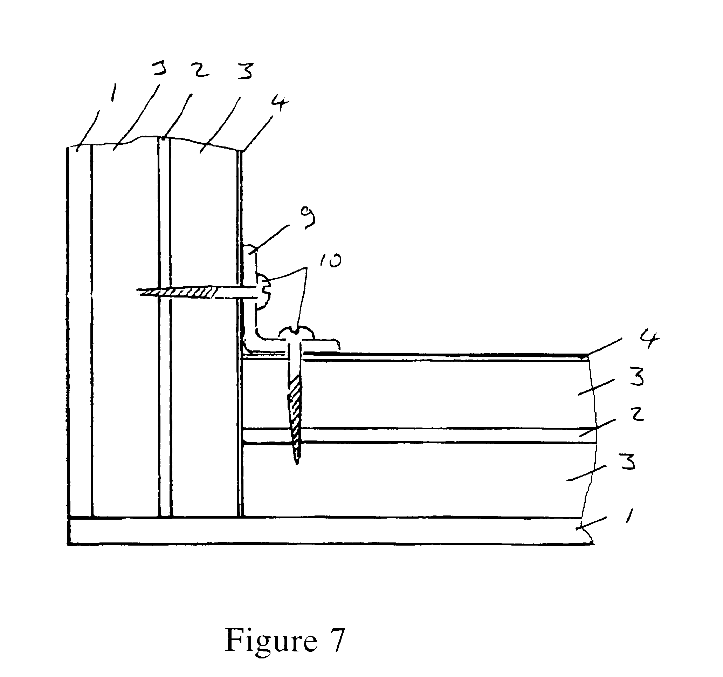

Figure 7 shows a corner joint with an angle bracket 9 used to locate and fix the two adjoining laminate boards during and after bonding. The screws 10 penetrate the backing 4 and foamed plastics layers 3 to be securely fixed in the structural layer 2. The bracket would normally be left in place after bonding, for added strength.

The laminated board may be used in may applications where for instance shelving may be needed. Fixings can be made at any point providing that a screw or other fixing penetrates the structural layer: this provides great flexibility whilst at the same time the laminate is comparatively light.

It will be appreciated that the fixing recesses which have been described may be formed on-site using standard woodworking tools.

## Claims

1. A laminate which comprises a surface material layer supported on two or more light-weight layers, and a relatively thin layer of structural material, having sufficient thickness and strength to provide a fixing, provided between the or each adjacent pair of light-weight layers.

2. A laminate as claimed in claim 1, in which said structural layer comprises a wood-based or wood substitute material.

3. A laminate as claimed in claim 2, in which said structural layer comprises chipboard or fibreboard or plywood.

4. A laminate as claimed in any preceding claim, having a finishing layer on the face opposite said surface material layer.

5. A laminate as claimed in any one of claims 1 to 3, having a said surface material layer on both opposite faces.

6. A laminate as claimed in any preceding claim, provided with an edging strip.

7. A laminate as claimed in claim 6, in which said edging strip has a series of U-shaped clips projecting from its rear face and engaged over the edge of the or a said structural material layer.

8. A laminate as claimed in any preceding claim, in which one or more recesses are cut into the face opposite said surface material layer, said recesses extending through the adjacent pair, or an adjacent pair, of light-weight layers and the intervening structural material layer, for receiving a fixing element.
